(19)

Europäisches
Patentamt

European
Patent Office

Office européen
des brevets

(11)  EP 3 035 219 A1

(12)  EUROPEAN PATENT APPLICATION

(43) Date of publication:
    22.06.2016  Bulletin 2016/25

(51) Int Cl.:
    *G06F 17/50* (2006.01)

(21) Application number: 15201084.9

(22) Date of filing: 18.12.2015

(84) Designated Contracting States:
    AL AT BE BG CH CY CZ DE DK EE ES FI FR GB
    GR HR HU IE IS IT LI LT LU LV MC MK MT NL NO
    PL PT RO RS SE SI SK SM TR
    Designated Extension States:
    BA ME
    Designated Validation States:
    MA MD

(30) Priority: 18.12.2014 US 201414574843

(71) Applicant: Dassault Systemes Simulia Corp.
    Johnston, RI 02919 (US)

(72) Inventor: VAN DER VELDEN, Alexander Jacobus
    Maria
    Atlanta, Georgia 30360 (US)

(74) Representative: Bandpay & Greuter
    30, rue Notre-Dame des Victoires
    75002 Paris (FR)

(54)  **INTERACTIVE 3D EXPERIENCES ON THE BASIS OF DATA**

(57)  Embodiments provide methods and systems for constructing surrogate models for use in interactive experiences. One such embodiment begins by defining a model that includes a parametric state vector and a design variable vector and represents a real world system. Next, a first and second experiment are performed to determine a response over time of the parametric state vector and to produce a dataset of the parametric state vector and the design variable vector as a function of time. The dataset is then modified with one or more derivatives of the parametric state vector and a set of surrogate differential equations is constructed that approximates a higher derivative of the parametric state vector relative to that in the dataset and the set of surrogate differential equations is stored as a surrogate model. The surrogate model is in turn provided from memory in a manner accelerating simulated behavior in response to user-interaction with the model.

100

FIG. 1

Define a model representing a real world system, the model including: a parametric state vector representing a behavior, and a design variable vector — 101

Perform a first experiment to determine a response over time of the parametric state vector and performing a second experiment for the design variable vector, said performing first and second experiments producing a dataset of the parametric state vector and the design variable vector as a function of time — 102

Modify the dataset with one or more derivatives of the parametric state vector — 103

Construct a set of surrogate differential equations approximating a higher derivative of the parametric state vector relative to that in the dataset, said constructing including operatively storing in memory the set of surrogate differential equations as a surrogate model — 104

Responsively provide the surrogate model from memory in a manner accelerating simulated behavior in response to user-interaction with the model, said providing the surrogate model solving the surrogate differential equations for a given value of the design variable vector including using a time-series that solves a state vector of the surrogate model as a function of time — 105

Printed by Jouve, 75001 PARIS (FR)

**Description**

BACKGROUND OF THE INVENTION

The invention generally relates to the field of computer programs and systems and specifically to the field of product design and simulation. Embodiments of the invention may also be employed in video games, engineering system design, collaborative decision making, and entertainment, e.g., movies.

A number of existing product and simulation systems are offered on the market for the design and simulation of parts or assemblies of parts. Such systems typically employ computer aided design (CAD) and/or computer aided engineering (CAE) programs. These systems allow a user to construct, manipulate, and simulate complex three-dimensional models of objects or assemblies of objects. These CAD and CAE systems, thus provide a representation of modeled objects using edges or lines, in certain cases with faces. Lines, edges, faces, or polygons may be represented in various manners, e.g. non-uniform rational basis-splines (NURBS).

These CAD systems manage parts or assemblies of parts of modeled objects, which are mainly specifications of geometry. In particular, CAD files contain specifications, from which geometry is generated. From geometry, a representation is generated. Specifications, geometry, and representations may be stored in a single CAD file or multiple CAD files. CAD systems include graphic tools for representing the modeled objects to designers; these tools are dedicated to the display of complex objects. For example, an assembly may contain thousands of parts. A CAD system can be used to manage models of objects, which are stored in electronic files.

The advent of CAD and CAE systems allows for a wide range of representation possibilities for objects. One such representation is a finite element analysis (FEA) model. The terms FEA model, finite element model (FEM), finite element mesh, and mesh are used interchangeably herein. A FEM typically represents a CAD model, and thus, may represent one or more parts or an entire assembly. A FEM is a system of points called nodes which are interconnected to make a grid, referred to as a mesh. The FEM may be programmed in such a way that the FEM has the properties of the underlying object or objects that it represents. When a FEM or other such object representation as is known in the art is programmed in such a way, it may be used to perform simulations of the object that it represents. For example, a FEM may be used to represent the interior cavity of a vehicle, the acoustic fluid surrounding a structure, and any number of real-world objects. Moreover, CAD and CAE systems along with FEMs can be utilized to simulate engineering systems. For example, CAE systems can be employed to simulate noise and vibration of vehicles.

Such existing simulation methods however are not without their drawbacks. Realistic experimental and numeral experiments, such as those described in *Numerical Models to Create Simulated Behavior,* available at http://www.3ds.com/products-services/simulia/overview/, and Helm, *Experimental Techniques,* the contents of which are herein incorporated by reference, take a lot of time and require significant expertise to carryout. Typical results from such simulations/experiments are provided in the forms of videos, images, or graphs. Behavioral research, such as the research presented in Kahneman, *Thinking Fast and Slow,* shows that "experience" is gained through real-time experimentation. If action causes a direct result in a short time interval, then "experience" is gained. Actions that have long term results only result in "experience" for a small group of people. Likewise, if there is no interactivity (i.e., no opportunity to change the experiment/simulation) little experience is gained. Therefore, the current paradigm of experts presenting scientific results through images, for example, is not efficient as a means to add to the experience of the audience.

Another problem with existing simulations/experiments is the time it takes to perform the simulation itself, as in *Experimental Techniques,* and then reuse the results, which is described in *Numerical Models to Create Simulated Behavior* and *Experimental Techniques.* Such time consuming simulations cannot be used for system verification or optimization that require up to a million verification experiments. Techniques are needed that are at least three to four orders of magnitude faster than current realistic simulation tools (e.g., nonlinear Finite Element Analysis) to do such system studies.

While attempts have been made to enhance the user "experience" of simulations/experiments, existing techniques are inadequate. A vast and widely used body of work, such as that described in Box *et al., Statistic for Experimenters: Design, Innovation, and Discovery,* is available in terms of experiments using numerical models to create simulated behavior as described in *Experimental Techniques,* and/or experimental testing as described in *Numerical Models to Create Simulated Behavior* and *Experimental Techniques.* These experiments/simulations are often interpolated using techniques such as response surface methods, Chebychev polynomials, kriging, or radial basis functions. These methods create an accurate transfer function between a set of fixed input, one dimensional (ID), parameters and a set of fixed output, ID, output parameters. One dimensional data is very abstract and abstract information is not an efficient means to add to the experience of the audience. Such methods are based on reducing the state space of the simulation. In such an example the complete 3D computational (i.e., meshed) model is known *a priori,* but the complexity and solve time of the model is reduced while maintaining a good fit to a known behavior model. This is typically done through reduction of the degrees of freedom (e.g., from millions of mesh nodes to tens of parameters) through techniques such as Principle Component Analysis, which is described in Jolliffe I.T. Principal Component Analysis, Series: Springer Series in Statistics, 2nd ed., Springer, NY.

Recently, work has been done to create special interpolations of field data using the Sirovich "snapshot method" with proper orthogonal decomposition. This method does reproduce two dimensional (2D) or 3D (field) data as a (linear) function of a small set of (basis) fields which makes the experience less abstract. However, this method is suited only to the compression of time-series simulation of a given model, and thus, does not allow for variations in the model as part of a scenario. In addition, the predicted values for individual sensor data (locations in the field) are not very accurate due to the tradeoffs in approximating the overall field.

There are existing tools for the compression of simulation field data, such as those described in Sirovich, *Turbulence and the Dynamics of Cocherent Structures I-III* and Fraunhofer, available at http://www.scai.fraunhofer.de/geschaeftsfelder/numerische-software/produkte/femzip.html?&L=1. These tools improve the speed at which the basis field (described by Sirovich) is computed for viewing. Such tools would also reduce data storage requirements to enable wider distribution. However, by themselves, these tools do not allow for the scenario and model to be changed "on the fly" in order to generate "experience" for a wide audience.

Another existing method relies upon parameter estimation, which is described in *Klein.* In performing such a method, differential equations are known, but some of the equation constants are not. For example, in the case of aircraft dynamics, unknown aerodynamic derivatives can be found by minimizing the error between flight data and aircraft model data for a known set of operations of motion.

Klein V. "Aerodynamic Parameters of High Performance Aircraft Estimated from Wind Tunnel and Flight Test Data", NASA-98-AGARD.

For example, equation (31) of Klein is:

$$\text{then for the harmonic motion}$$

$$\Delta C_L = \alpha_A \left( C_{L\alpha} - k^2 C_{Lq} \right) \sin \omega t + \alpha_A k \left( C_{L\dot{\alpha}} + C_{Lq} \right) \cos \omega t$$

$$= \alpha_A \left( \bar{C}_{L\alpha} \sin \omega t + k \bar{C}_{Lq} \cos \omega t \right)$$

$$(31)$$

There the terms $C_{L\alpha} C_{Lq} C_{Lq}$ and k would be calibrated or fitted to the equation based on experimental data for t, $C_L$, $q$, $\alpha$, $\dot{q}$.

For many novel product design simulations the equations of motion are not as well-known as those of aircraft shown here. Thus, many simulations cannot rely on the above described method. The methods relying upon parameter estimation are complementary to the approach discussed in Jolliffe because it reduces the number of parametric states to a level that is manageable for higher order mathematical surrogates.

Embodiments of the present invention overcome the problems with existing experiment/simulation techniques as described hereinabove.

SUMMARY OF THE INVENTION

Embodiments of the present invention provide methods and systems for constructing a surrogate model for use in an interactive experience. According to at least one example embodiment, a method for generating a surrogate model for use in an interactive experience begins by defining a model that represents a real-world system, where the model includes a parametric state vector representing a behavior and a design variable vector. Such a method further includes performing a first experiment (simulation, analysis, etc.) to determine a response over time of the parametric state vector and performing a second experiment for the design variable vector. The first and second experiments produce a dataset of the parametric state vector and the design variable vector as a function of time. The method continues by modifying the data set with one or more derivatives of the parametric state vector and then constructs a set of surrogate differential equations which approximate a higher derivative of the parametric state vector relative to that in the data set. In such an embodiment, the constructing includes operatively storing the set of surrogate differential equations as a surrogate model in memory. Such a method is used in an interactive experience by responsively providing the surrogate model from memory in a matter accelerating simulated behavior in response to user interaction with the model. This may be implemented by solving the surrogate differential equations for a given value of the design variable vector including using a time series that solves a state vector of the surrogate model as a function of time.

In an alternative embodiment of the method, constructing the set of surrogate differential equations comprises iteratively constructing one or more candidate sets of surrogate differential equations, and selecting the set of surrogate differential equations from the one or more candidate sets to be stored as the surrogate model, where the selected set is the set with the lowest cross validation error to at least a subset of the data set. In such an embodiment, the subset of the data set may be referred to herein as a validation data set. According to another embodiment, modifying the data set with the one or more derivatives of the parametric state vector includes removing time from the data set. In yet another embodiment, the first and second experiments are at least one of a physical experiment and a numerical high fidelity experiment. Another embodiment may further comprise reducing the dimensionality of the defined model. In such an embodiment, reducing the dimensionality of the defined model employs at least one of principal component analysis, k-nearest neighbors, and subspace learning.

Moreover, in yet another embodiment, the defined model includes at least one of discrete events and boundary conditions. An implementation of the method may further comprise exporting the surrogate model to a functional mock-up interface. Further still, an embodiment may employ the surrogate model in a hardware system wherein the hardware system is a flight simulator or automotive electronic control unit.

According to an embodiment of the invention, performed in accordance with the principles described herein, the higher derivative of the parametric state vector may be approximated by using at least one of: radial basis functions, neural nets, chebychev polynomials, response surface methods, polynomial response surface methods, arbitrary term regression, support vector machines, and space-mapping. According to methods of the invention, constructing the surrogate model further includes optimizing the surrogate model to reduce variance and bias error.

An alternative embodiment of the invention is directed to a system for generating a surrogate model for use in an interactive experience. Such a system may comprise a model definition module configured to define a model which represents a real-world system, wherein the defined model includes a parametric state vector representing a behavior and a design variable vector. According to an embodiment of the present invention, the system further includes an experiment module which is operatively coupled to the model definition module and is configured to perform a first experiment to determine a response over time of the parametric state vector and a second experiment for the design variable vector. The experiments produce a data set of the parametric state vector and the design variable vector as a function of time. In an embodiment, the system further includes a data set module configured to receive the data set from the experiment module and to modify the data set with one or more derivatives of the parametric state vector. A surrogate module is further included in the system and the surrogate module is configured to construct a set of surrogate differential equations which approximate a higher derivative of the parametric state vector relative to that in the data set. Furthermore, the surrogate module may operatively store the set of surrogate differential equations as a surrogate model in memory. The system further includes an interaction module configured to responsively provide the surrogate model from memory in a manner which accelerates simulated behavior of the model in response to user interaction. Said providing the surrogate model solves the surrogate differential equations for a given value of the design variable vector including using a time series that solves the state vector of the surrogate model as a function of time.

According to an embodiment of the system, the surrogate module is configured to construct the set of surrogate differential equations by iteratively constructing one or more candidate sets of surrogate differential equations. In such an embodiment, the set of surrogate differential equations stored as the surrogate model is selected from the one or more candidate sets as the set with the lowest cross validation error to at least a subset of the data set. In an embodiment, the data set module is configured to modify the data set with the one or more derivatives of the parametric state vector. In yet another embodiment, the first and second experiments are at least one of a physical experiment and a numerical high fidelity experiment. According to yet another embodiment of the system, the defined model includes at least one of discrete events and boundary conditions.

Moreover, in an embodiment where the defined model is a high fidelity, high dimensional numerical model, the model definition module is further configured to reduce the dimensionality of the defined model. In such an embodiment, the model definition module may be configured to reduce the dimensionality of the defined model by employing at least one of principal component analysis, k-nearest neighbors, and subspace learning. An alternative embodiment of the system further comprises an export module configured to export the surrogate model to a functional mockup interface. In yet another embodiment, the system is integrated into a flight simulator or automotive electronic control unit.

The surrogate module may be configured to approximate the higher derivative of the parametric state vector using at least one of: radial basis functions, neural nets, chebychev polynomials, response surface methods, polynomial response surface methods, arbitrary term aggression, support vector machines, and space-mapping.

Another embodiment of the present invention is directed to a cloud computing implementation for generating a surrogate model. Such an embodiment is directed to a computer program product executed by a server in communication across a network with one or more clients, the computer program product comprising a computer readable medium. The computer readable medium comprises program instructions which, when executed by a processor causes: defining a model representing a real-world system, wherein the model includes a parametric state vector representing a behavior and a design variable vector; performing a first experiment to determine a response over time of the parametric state vector and performing a second experiment for the design variable vector, wherein performing first and second experiments produces a data set of the parametric state vector and the design variable vector as a function of time; modifying the data set with one or more derivatives of the parametric state vector; constructing a set of surrogate differential equations approximating a higher derivative of the parametric state vector relative to that in the data set, wherein constructing the set of equations includes operatively storing in memory the set of surrogate differential equations as a surrogate model; and responsively providing the surrogate model from memory in a manner accelerating simulated behavior in response to user interaction with the model, wherein providing the surrogate model includes solving the surrogate differential equations for a given value of the design variable vector including using a time series that solves the state vector of the surrogate model as a function of time.

BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

FIG. 1 is a flowchart of a method for constructing a surrogate model for use in an interactive 3D experience according to an embodiment of the present invention.
FIG. 2 illustrates various components used in an N-code simulation of airfoil flutter implementing principles of the present invention.
FIG. 3 illustrates the CFD flow field for a flap during control system actuation that is determined utilizing principles of an embodiment.
FIG. 4 portrays a CAD model of an aircraft and associated graphs illustrating angle of attack and control servo angle that may be employed in an embodiment of the present invention.
FIG. 5 is a graph of airfoil pitch simulated as a function of time.
FIG. 6 illustrates validation of a linear surrogate model representing $2^{nd}$ order ordinary differential equations determined according to an example embodiment.
FIG. 7 illustrates validation of a linear surrogate model representing nonlinear $2^{nd}$ order ordinary differential equations determined according to an example embodiment.
FIG. 8 is a flow chart depicting a method of generating a surrogate model according to the principles of an embodiment.
FIG. 9 illustrates airfoil pitch and airfoil vertical displacement determined according to the principles of an embodiment approximated with a $4^{th}$ order RSM with controller off and RBF with controller on at 4.8 seconds and 33 Hz.
FIG. 10 is a graph illustrating time series from Airfoil Flutter N-code simulation approximated with a $4^{th}$ order RSM with controller off and RBF with controller on at 3.1 seconds and 42Hz.
FIG. 11a is a flowchart of a method for generating a surrogate model according to principles of the present invention.
FIG. 11b is a continuation of the method for generating a surrogate model illustrated in FIG. 11a.
FIG. 12 is a flowchart depicting a method for employing principles of the present invention in a simulation.
FIG. 13 is a simplified block diagram of a system for generating a surrogate model for a 3D experience according to principles of an embodiment.
FIG. 14 is a simplified diagram of a computer network environment in which an embodiment of the present invention may be implemented.

DETAILED DESCRIPTION OF THE INVENTION

A description of example embodiments of the invention follows.
The teachings of all patents, published applications and references cited herein are incorporated by reference in their entirety.
Embodiments of the present invention overcome the aforementioned limitations of simulations/interactive three-dimensional experiences. One such embodiment of the invention is directed to a method to create a near real-time experience by accelerating realistic behavior simulation models using mathematical surrogates. These surrogate models are based on physical test data or high-fidelity simulation data. High-fidelity N-code (FEA, Computational Fluid Dynamics (CFD), or logical) co-simulations can take as much as an hour of CPU time for each real-time second of behavior prediction. Embodiments of the invention speed up this process by orders of magnitude so that it is fast enough to be used in real-time or near real-time applications. This makes it a practical technology for interactive design, multi-disciplinary optimization, and verification of cyber-physical systems. These surrogate models can be wrapped as a Functional Mockup Unit and deployed in a system simulation tool and/or embedded in hardware. FMUs are described at http://www.functional-mockup-interface.org/index.html, the contents of which are herein incorporated by reference.
An embodiment accelerates realistic behavior modeling by first executing a physical or numerical high-fidelity experiment on a physical or numerical model and observing the response over time of the parametric state vector $p$ (e.g., time, $p$) that represents the behavior of interest. This model can contain discrete events (e.g., controller on/off) as well as forced boundary conditions such as road excitations. Alternatively, before executing such an experiment, an embodiment may first reduce the dimensionality of the high-fidelity, high-dimensional numerical model using principal component analysis, or a similar technique, to a manageable number of parameters (e.g., approximately 100). To continue, after executing the experiment, such an embodiment next repeats this experiment in a structured (e.g., design of experiment) or unstructured way for a model design variable vector of interest $v$ to produce a dataset as a function of (time, $v$, $p$) for a given set of initial conditions $p$(time=0).

The method continues by combining the datasets and differentiating the state variables with respect to time using a backward differentiation scheme and then removing time from the dataset, yielding ($v$, $p$, $\dot{p}$, $\ddot{p}$). Then, higher derivatives as a surrogate function of the lower derivatives $\ddot{p} = (v, p, \dot{p})$ are approximated using techniques such as radial basis functions, neural nets, chebychev polynomials, and response surface methods with term reduction over a training set that is part of the complete set in $\ddot{p} = (v, p, \dot{p})$. The right predictive surrogate is selected and its technique settings are optimized to reduce its variance and bias error and validated with the part of the dataset that is not used in the training. Thus, forming the surrogate model. An embodiment may also numerical forward integrate $p$(t) from time=0 for a given value $v$ and give initial conditions $p$(time=0) and $\dot{p}$ (time=0). These initial conditions of the state vector and design values are not limited to be the same as those of the original time series experiments. This model can in turn be exported to an FMU and be directly employed in 3D modeling software to simulate realistic behavior in near real-time. Alternatively, it can be used directly in hardware, such as a flight simulator or an automotive electronic control unit (ECU).

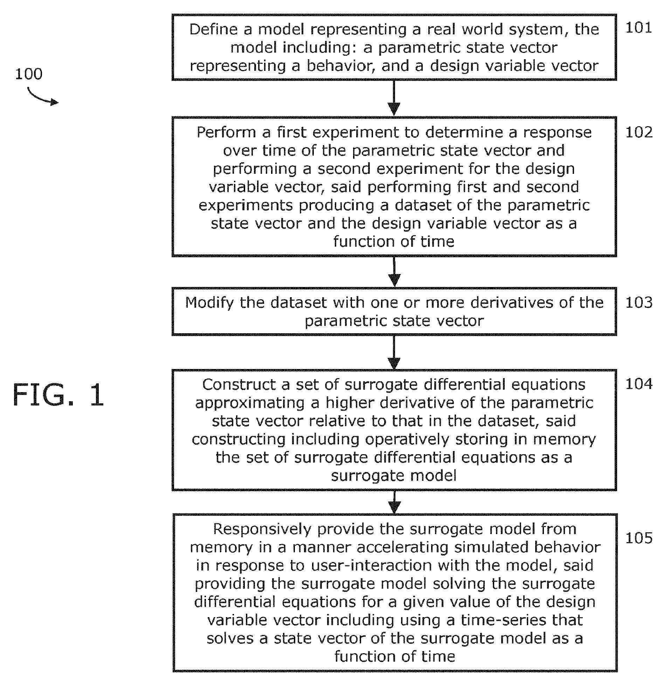

FIG. 1 is a flow diagram of a method 100 for generating a surrogate model for use in an interactive experience. The method 100 begins by defining a model representing a real-world system (101). The defined model includes a parametric state vector which represents a behavior and a design variable vector. For example, the parametric state vector may include the position and angles of rotation (and their derivatives) of an object and the design variable vector may comprise the mass and the force (and its direction) on an object. The model that is defined at step 101 may represent any real-world system, examples of which are described herein below. Furthermore, the model may be defined according to principles known in the art, for example through use of a CAD system. The method 100 continues by performing a first experiment to determine a response over time of the parametric state vector and a second experiment for the design variable vector (102). An example experiment includes recording time series of parameteric state for various masses, forces, and force directions. The performance 102 produces a data set of the parametric state vector and the design variable vector as a function of time. After performing the experiments 102, the method 100 next modifies the data set with one or more derivatives of the parametric state vector (103). According to an embodiment, step 103 includes determining the one or more derivatives of the parametric state vector computed directly from the time step and the state vector value at the time step using a finite difference method. Next, a set of surrogate differential equations is constructed which approximates a higher derivative of the parametric state vector relative to that in the data set (104). In a computer implemented embodiment of the method 100, constructing the set of surrogate differential equations 104, comprises operatively storing the set of surrogate differential equations as a surrogate model in memory. The method 100 concludes by responsively providing the surrogate model from memory in a manner accelerating simulated behavior in response to user interaction with the model (105). In providing the surrogate model 105, the surrogate differential equations are solved for a given value of the design variable vector including using a time series that solves the state vector of the surrogate model as a function of time. This providing of the surrogate model 105 thus provides an improved user experience.

According to an embodiment of the method 100, constructing the set of surrogate differential equations 104, may be performed by iteratively constructing one or more candidate sets of surrogate differential equations and in turn, selecting the set of surrogate differential equations stored as the surrogate model as the set from the one or more candidate sets with the lowest cross validation error to at least a subset of the data set. This subset of the data set that is used in performing the equation constructing may be considered a validation data set. According to yet another embodiment of the method 100, modifying the data set 103 may include removing time from the data set. In yet another embodiment, the first and second experiments performed at step 102 of the method 100, are a physical experiment and/or a numerical high fidelity experiment.

In yet another embodiment of the method 100, the defined model further includes discrete events and boundary conditions. In an embodiment where the defined model is a high fidelity, high dimensional numerical model, the method 100 may further comprise reducing the dimensionality of the defined model. According to such an embodiment, the dimensionality may be reduced according to principles known in the art, for example, by employing principal component analysis, k-nearest neighbors, and/or subspace learning.

The method 100 may also include exporting the surrogate model to a functional mockup interface. In an alternative implementation, the method 100 is employed in a hardware system, such as a flight simulator or automotive electronic control unit. In an embodiment of the method 100, the higher derivative of the parametric state vector is determined at step 104 using at least one of: radial basis functions, neural nets, chebychev polynomials, response surface methods, polynomial response surface methods, arbitrary term regression, support vector machines, and space-mapping. In yet another embodiment, constructing the surrogate model at step 104 further includes optimizing the surrogate model to reduce variance and bias error.

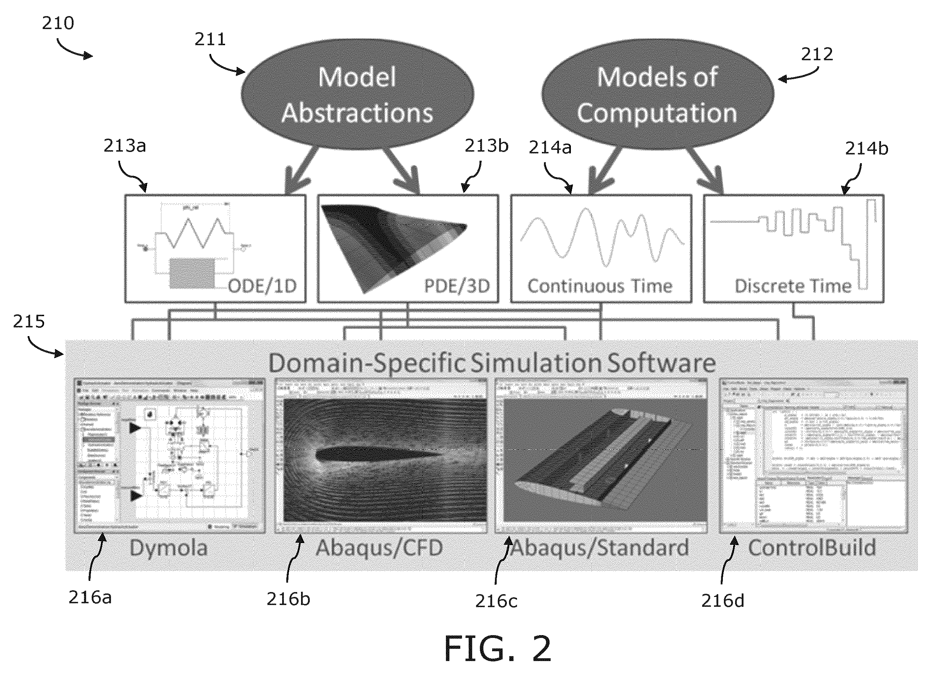

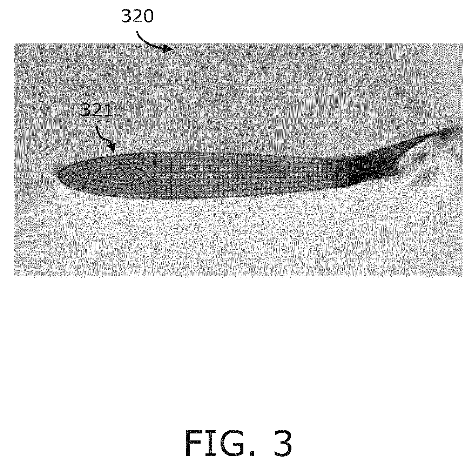

FIG. 2 illustrates an overview of a method 210 for creating individual response time series data on which an interactive experience, carried out according to the principles of the present invention, can be based. The example described below and illustrated in FIG. 2 employees datasets of a 4-code CFD-FEA-logical-embedded source co-simulation as described in Van der Velden *et al.,* "Probabilistic Certificate of Correctness for Cyber Physical Systems," ASME 2012 International Design Engineering Technical Conferences & Computers and Information in Engineering Conference, August 12-15, Chicago, IL, USA, DETC2012-70135, the contents of which are incorporated herein by reference. These datasets include an ordinary differential equation / one dimensional dataset 213a and a partial differential equation / 3D dataset 213b, both of which result from model abstractions 211, and a continuous time dataset 214a and a discrete time dataset 214b, both of which result from models of computation 212. The datasets 213a, 213b, 214a, and 214b are processed by domain simulation software 215 that, by way of non-limiting example, may include Dymola 216a, Abaqus/CFD 216b, Abaqus/Standard 216c, and ControlBuild 216d. These data sets 213a, 213b, 214a, and 214b can be converted into a model that can be interactively solved according to principles described herein. The overview illustrated in FIG. 2 may provide a user with the data of the CFD flow-field 320, shown by the shading, for the finite element model 321 illustrated in FIG. 3. In such an example, the flow-field may be determined by employing Navier-Stokes for the partially separated flap during control system actuation.

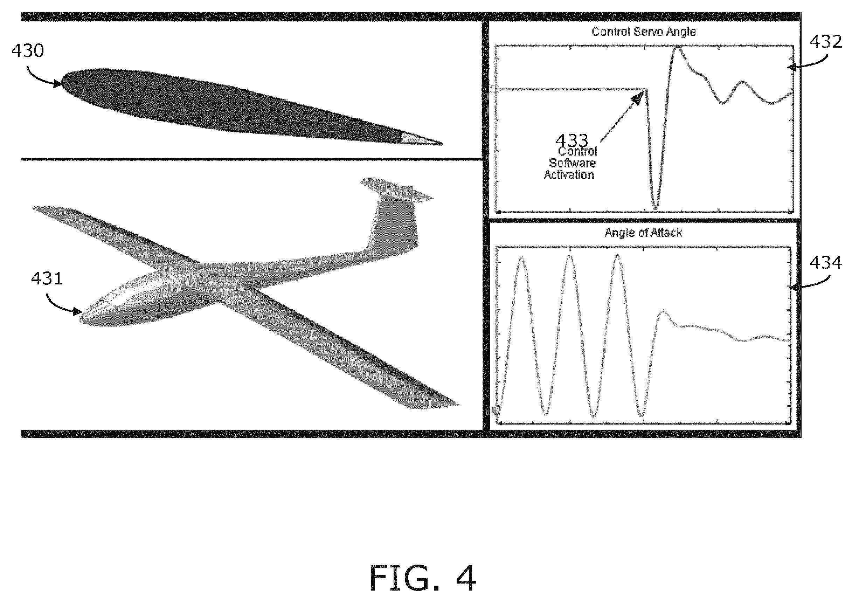

FIG. 4 illustrates a glider 431, with the wing 430. The wing 430 exhibits a twisting and vertically displacing limit cycle motion called flutter. At a given time, t, an active flutter control system which moves the trailing edge flap of the wing 430 is deployed. This system consists of sensors, embedded software, and electrical motors to actuate the flap mechanism. The example method described herein provides an interactive experience that models flutter of the wing 430. For a given spanwise location on the wing 430, high aspect ratio data is provided for the state of the wing 430, such as the control servo angle 432, which indicates control software activation 433, and angle of attack 434. Other data may include vertical displacement.

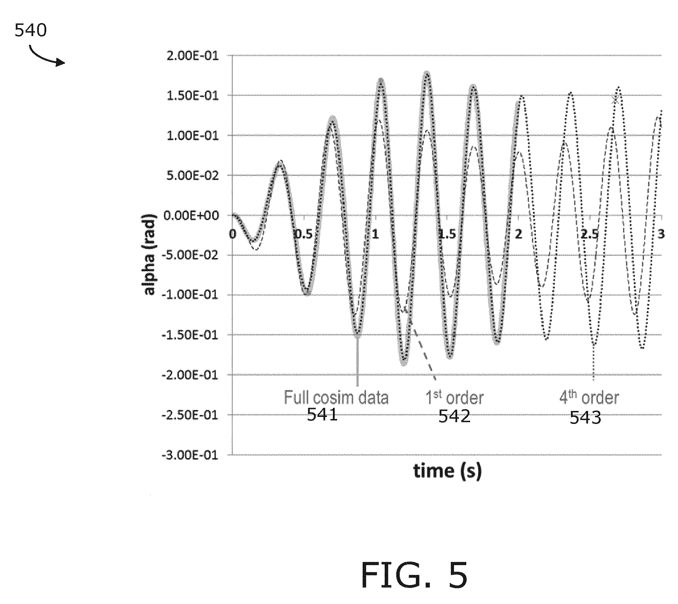

FIG. 5 is a graph 540 that illustrates airfoil pitch $\alpha$ as a function of time. The graph 540 includes data 541 representative of airfoil pitch as simulated as a function of time by the high-fidelity co-simulation for the free limit cycle motion (without flutter suppression activation). The full co-simulation data 541 represents data determined using existing batch processing methodologies, that while providing good accuracy, can be extremely time consuming and computationally expensive to produce. Thus, embodiments of the invention calculate surrogates that approximate the full co-simulation data 541.

Starting with airfoil pitch data $\alpha$, and vertical displacement data $z$, an embodiment proceeds to differentiate the dataset using a backwards numerical step to yield a set of data of the state parameters and their time derivatives (t, $\alpha$, $\dot{\alpha}$, $\ddot{\alpha}$, $z$, $\dot{z}$, $\ddot{z}$). Next, time is removed as a parameter and a system of equations is created based on surrogates F to express the higher derivatives of $\alpha$ and $z$ as a function of the state vector ($\alpha$, $z$) and its lower derivatives using part of the co-simulation data. The remaining data is reserved for validating the surrogates. The resulting system of equations is provided below:

$$F_1(\alpha, \dot{\alpha}, z, \dot{z}) = \ddot{\alpha}$$

$$F_2(\alpha, \dot{\alpha}, z, \dot{z}) = \ddot{z}$$

To continue, $F_1$ and $F_2$ may be expressed as a linear regression surrogate model to obtain a 2nd order linear ordinary differential equation representing the well-known spring damper model. It is noted, that this spring damper model is derived without prior knowledge that this is an adequate model form for wing flutter. Thus, embodiments of the invention do not require prior knowledge of an adequate model for representing the system. An example of the 2nd order linear ordinary differential equation derived using the data for this example is provided below:

$$\begin{bmatrix} \ddot{\alpha} \\ \ddot{z} \end{bmatrix} = \begin{bmatrix} -1.4 \\ 0 \end{bmatrix} + \begin{bmatrix} -423.11 & -127.73 \\ 18.513 & -230.74 \end{bmatrix} \begin{bmatrix} \alpha \\ z \end{bmatrix} + \begin{bmatrix} 2.5370 & 26.374 \\ 0.19421 & -3.2897 \end{bmatrix} \begin{bmatrix} \dot{\alpha} \\ \ddot{z} \end{bmatrix}$$

The resulting 1st order surrogate model representing a 2nd order differential equation is shown by the dashed line 542 of FIG. 5. As shown in FIG. 5, the 2nd order model has similar frequency to the full co-simulation data 541, but the amplitude is quite different. The graph 540 further includes data 542 representative of the airfoil flutter N-code simulation approximated with a 1st order surrogate , and data representative of the 4th order surrogate 543. Similarly, there exists a figure of airfoil vertical displacement $z$, as a function of time for a given bandwidth w of the flutter control system. Such data may be represented similarly to the data shown in FIG. 5.

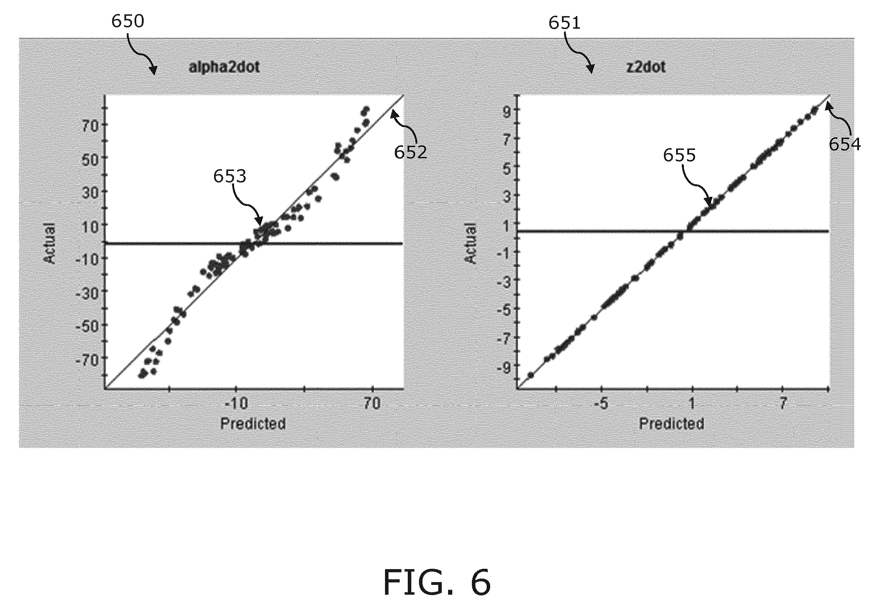

Embodiments of the invention can further determine the source of such error by validating the model with the above mentioned set aside data. Such evaluation indicates that there is a large error between the actual $\ddot{\alpha}$ data and the one predicted by the 2nd order ODE constructed from the linear surrogate. This error is shown in FIG. 6, where graph 650 shows the $\ddot{\alpha}$ data, where the line 652 represents a perfect validation of the model, and the data points 653 show the actual data that was set aside. From this validation it is known a-priori that the linear surrogate is not a good approximation to limit cycle co-simulation. This may be due to the non-linearity of the airfoil flow separation at high angles. FIG. 6 further illustrates, in the graph 651, that the z approximation is quite good. Where the line 654 is the predicted $\ddot{z}$ data, and the data points 655 are the remaining data points that were previously set aside.

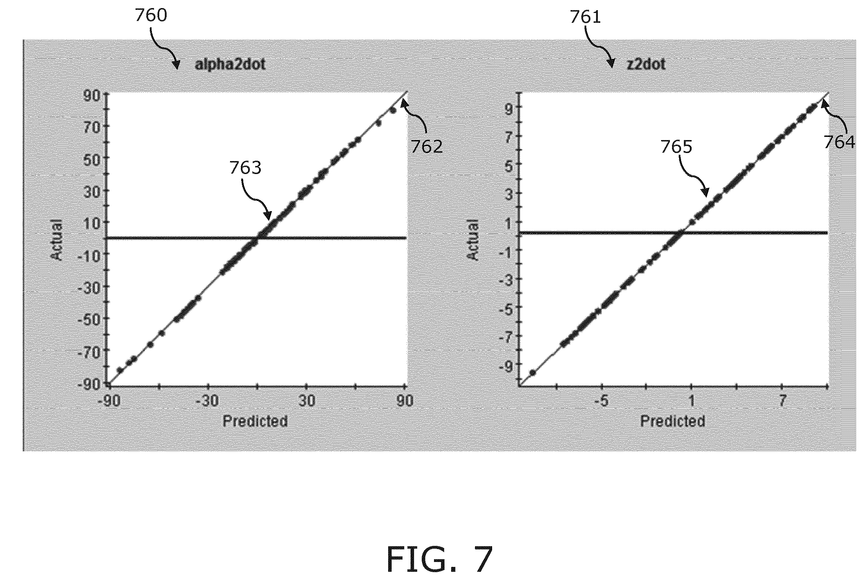

In order to correct this error, an embodiment may switch the surrogate model from a 2nd order model to a 4th order model and repeat the validation using the 4th order model. The result of this validation is shown in FIG. 7, where the $\ddot{\alpha}$ data and $\ddot{z}$ data are shown by the graphs 760 and 761, respectively. The graphs 760 and 761 both show that the predicted data 762 and 764 aligns quite well with the corresponding data points 763 and 765. The results of this 4th order model are shown in FIG. 5 by the dotted points 543, which align with the original co-simulation behavior results 541, and extrapolates well. Thus, such an embodiment has developed a surrogate model that can be used in an interactive experience without the computational cost of using full co-simulation data.

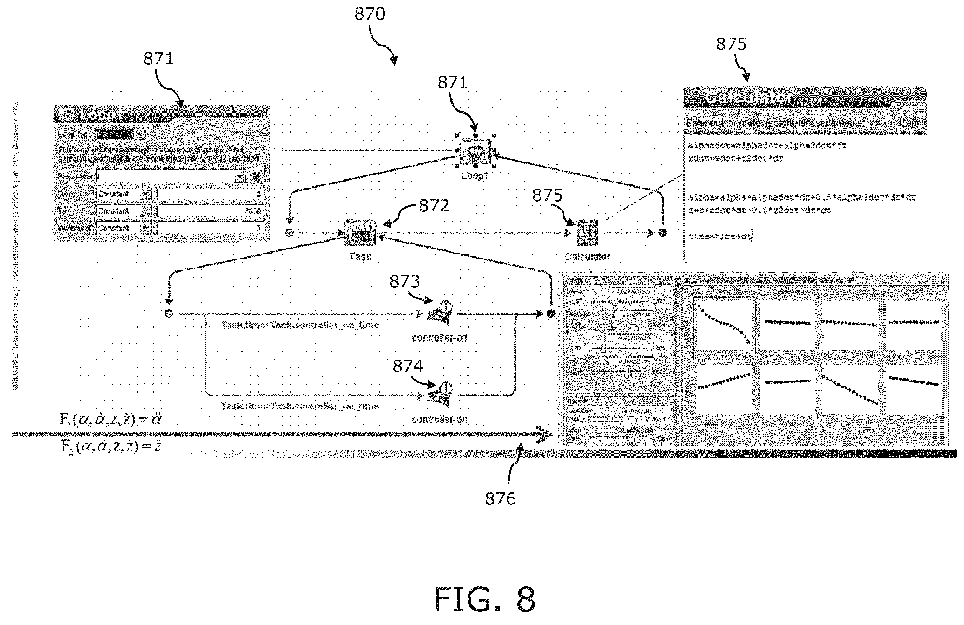

The implementation of such a method is shown in FIG. 8, where the validated model shown in FIG. 7 is used in the method 870 for the limit cycle motion until event time=Task.controller_on_time. The method 870 comprises a loop 871 that iterates through a sequence of values of the selected parameter, in this case, until the controller-on time 874, which is a component of the task process 872. In each iteration of the loop 871, the task process 872 identifies whether the time is less than the controller-off time 873, indicating that the controller is off, or greater than the control-on time 874, indicating that the controller is on. When the time is less than the controller-on time, i.e., when the controller is off 873, the 4th order surrogate described above is used to calculate $\alpha$ and z, at the process 875. The interactive model 876 of the system of equations comprising $F_1$ and $F_2$ described hereinabove can be employed in the system 870 to compute $\ddot{\alpha}$ and $\ddot{z}$ using different inputs to the system of equations.

Embodiments of the invention can further introduce the effect of design variables. In the example described hereinabove, this is done by adding samples with a bandwidth of w = 20, 25, 33, 50, and 100 Hz and the digital controller actuating the flap at time = controller_on_time. Yielding a data set, (t, $t_{controller}$ on, w, $\alpha$, $\dot{\alpha}$, $\ddot{\alpha}$, z, $\dot{z}$, $\ddot{z}$). The process described above is then repeated with this data set to create a new surrogate model that is activated at the time = controller_on_time. In such an embodiment, the 4th order RMS method does not work. However, by replacing the RMS method with the Radial Basis Function surrogate method, such as described in Hardy, "Multiquadratic equations of topography and other irregular surfaces", J. Geophysics Res. 76, 1905-15 (1971).

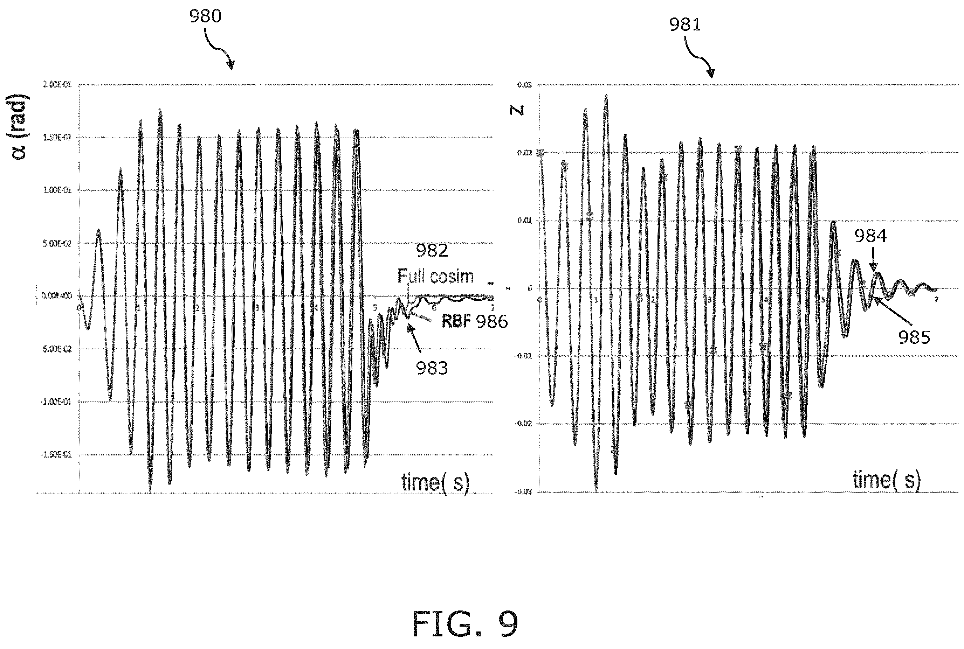

The results of this modified surrogate model are shown in FIG. 9, where the graph 980 shows $\alpha$ versus time and the graph 981 shows z versus time. In the graphs the more lightly shaded lines, 982 and 984, illustrate the full co-simulation results and the darker lines 983 and 985 show $\alpha$ and z approximated with a 4th order RSM with the controller off and with RBF 986, with the controller on at 4.8 seconds and 33 Hz.

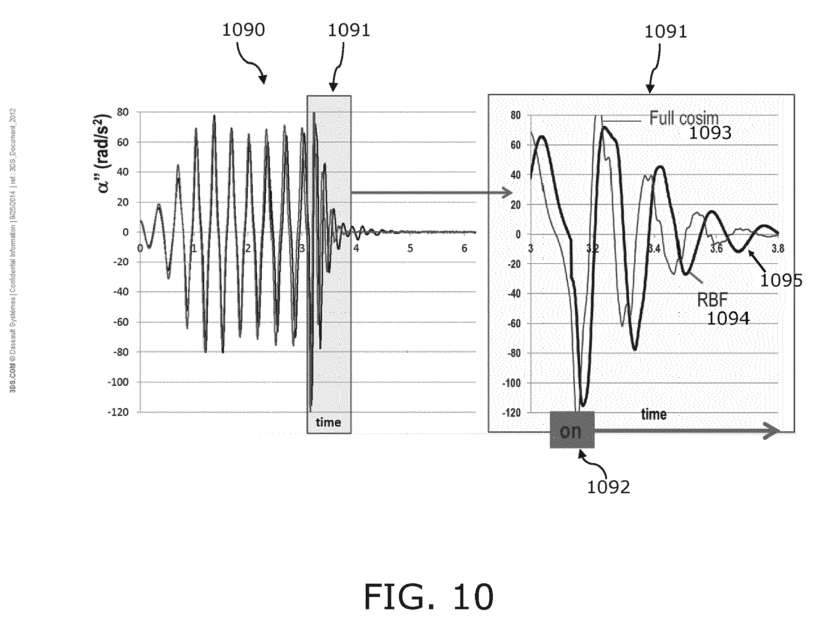

Described above are methods for constructing surrogate models according to the principles of the invention using training data. However, embodiments of the invention are not so limited and the constructed surrogate models can be used in simulations / interactive experiences, using other data, such as data provided by a user. In such an embodiment, the behavior of the airfoil system may be determined by using the surrogate models with different system bandwidth, different system controller-on time, and different initial conditions. FIG. 10 shows a validation of the system principles with said different data, 4th order RSM with controller off and RBF with controller on at 3.1 seconds and 42 Hz. The graph 1090 shows the response of $\ddot{\alpha}$ versus time under the aforementioned conditions. The portion 1091 of the graph is further enlarged in FIG. 10 to show the further detail of the response when the controller is turned on 1092 and the RBF simulation technique is employed 1094. The graph 1090 indicates that the surrogate data 1095 closely follows the full co-simulation data 1093.

As can be observed in the exploded area 1091 of FIG. 10, over time some state error builds up due to numerical integration error (euler time steps) and approximation error which can lead to an off-set between the time series. When the controller is turned on at 3.1s the full co-simulation creates a smooth transition to very high pitch accelerations $\ddot{\alpha}$ (-120 rad/s$^2$) due to flap deflection. The surrogate however jumps from controller off (0 Hz) to 42 Hz in a single time step, thus creating a step in the radial acceleration. However, from that point on the acceleration predicted by the surrogate is smooth, whereas the full co-simulation with digital controller has high frequency discrete corrections to the pitch acceleration. However, this is an acceptable error for practical applications. Such an embodiment, provides an accurate real time (surrogate) model to employ in real time interactive experiments. For example, the surrogate model could be used to determine whether there are bandwidths or activation times/conditions where the system becomes unstable. In yet another embodiment, the surrogate model is further enhanced by adding time-dependent boundary conditions such as variations in angle of attack due to atmospheric conditions in the simulation loop.

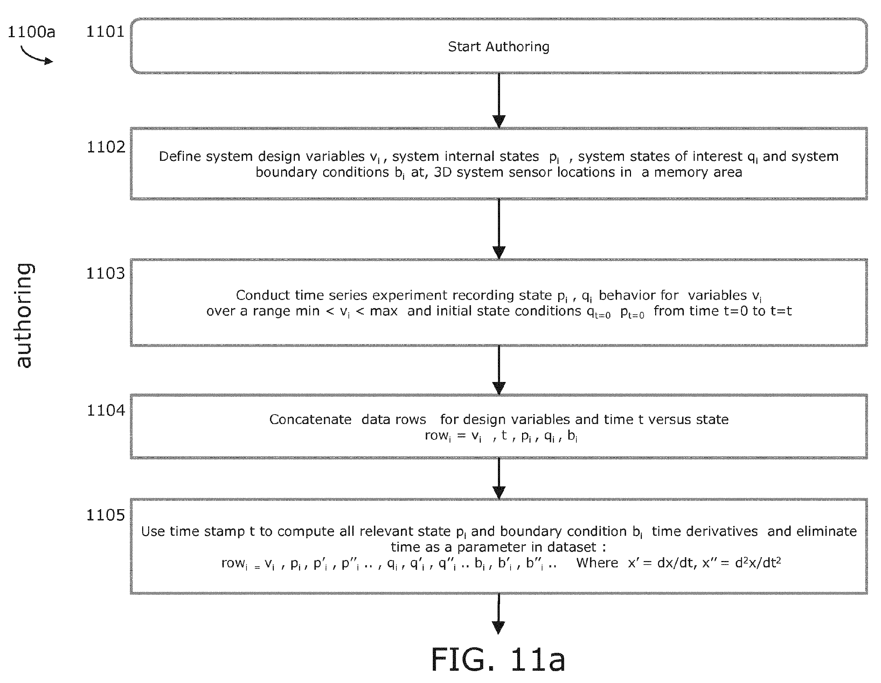

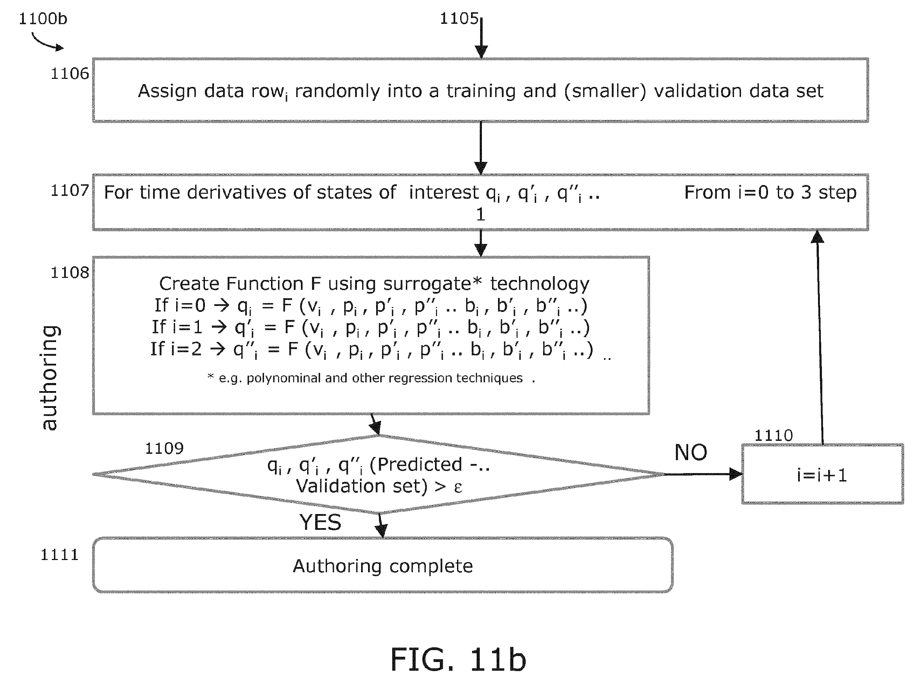

As introduced hereinabove, and further described in relation to FIGs. 11a and 11b, embodiments of the present invention do not require knowledge of the physics differential equations that simulate the system. It is only necessary that the dataset includes the state/design vectors that are relevant. If such relevant vectors are not included, the method will produce a high cross-validation error, thus signaling that the model is lacking relevant vector data. Such a method is advantageous over existing techniques such as Kalman filtering and parameter estimation which both require that the model form (equations of the vectors) have to be defined a priori. In order to construct the surrogate model, according an embodiment, the model form is constructed and identified through an iterative method as the surrogate differential equation model with the lowest cross-validation error to the validation data set. Such a method is described herein below in relation to the FIGs. 11a and 11b.

FIGs. 11a and 11b illustrate a method 1100 (split between 1100a in FIG. 11a and 1100b in FIG. 11b) for constructing a surrogate model according to an embodiment of the present invention. The method 1100 starts the authoring 1101 and defines system design variables $v_i$, system internal states $p_i$, system states of interest $q_i$, and system boundary conditions $b_i$ at 3D system sensor locations, in a memory area (1102). Next, a time series experiment is performed and the resulting system internal state results $p_i$ and system states of interest $q_i$ are determined for values of $v_i$ over a range, min $< v_i <$ max and initial state condition $q_{t=0}$, $p_{t=0}$ from time t = 0 to t = t (1103). The method 1100 continues by concatenating data rows for design variables and time t versus state variables, to yield $row_i = v_i$, t, $p_i$, $q_i$, $b_i$ (1104). After generating the data rows, the time stamp t is used to compute all relevant state $p_i$ and boundary conditions $b_i$ time derivatives and then time is eliminated as a parameter in the dataset which results in $row_i = v_i$, $p_i$, $p'_i$, $p''_i$, ... $q_i$, $q'_i$, $q''_i$, ... $b_i$, $b'_i$, $b''_i$, where x = dx/dt, x"= $d^2x/dt^2$ (1105). After performing the process 1105, data rows $row_i$ are randomly assigned into a training data set and a validation data set (1106). After this, for time derivatives of states of interest qi, $q'_i$, $q''_i$ is iterated from i = 0 to 3, for example (1107). In the method 1100, i is iterated according to the test 1109 described below. At each iteration, a function F is constructed using surrogate technology, such as polynomial or other regression techniques, which yields the following equations: if i = 0, $q_i = F(v_i, p_i, p'_i, p''_i, ... b_i, b'_i, b''_i, ...)$; if i = 1, $q'_i = F(v_i, p_i, p'_i, p''_i, ... b_i, b'_i, b''_i...)$; if i = 2, $q''_i = F(v_i, p_i, p'_i, p''_i, ... b_i, b'_i, b''_i, ...)$ (1108). After each function F is created using surrogate technology (1108), it is tested 1109, to determine if $q_i$, $q'_i$, $q''_i$ of the predicted data minus the validation set from step 1103 is greater than ε, where ε is the model validation error, e.g. the difference between the line 652 representing a perfect validation of the model, and the actual data points 653. If $q_i$, $q'_i$, $q''_i$ (predicted - validation set) is greater than ε, the method 1100 ends 1111. However, if $q_i$, $q'_i$, $q''_i$ (predicted - validation set) is less than ε, i is incremented 1110, and the method returns to process 1107 to continue.

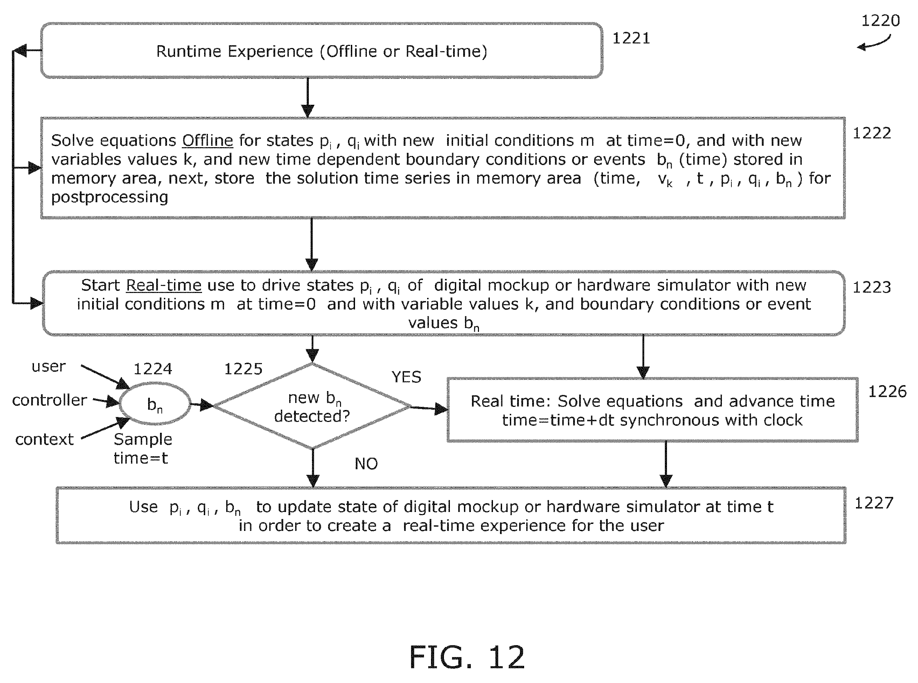

FIG. 12 illustrates a method 1220 for employing the method 1100, or any method described herein, in an interactive experience. The method 1220 begins via a runtime experience 1221 and then equations, such as the surrogate differential equations F described in relation to FIGs. 11a and 11b, are solved offline for states $p_i$, and $q_i$ with new initial conditions m, at time = 0 and with variable values k, and new time dependent boundary conditions or events $b_n$ (time) which are stored in memory area (1222). The process 1222 continues by storing the solution time series in a memory area (time, $v_k$, t, $p_i$, $q_i$, $b_n$) for post-processing. Next, the real time use begins by driving states $p_i$ and $q_i$ of the digital mock-up or hardware simulator with new initial conditions m at time = 0 and with variable k, and boundary conditions or event values $b_n$ (1223). The method 1220 further accommodates the introduction of new event values, $b_n$, such as user, controller, or context values at point 1224 of the process. The method 1220 monitors whether a new event value $b_n$ is received 1225, and if so, in real time, solves equations and advances the time, time = time + dt synchronous with the clock (1226). If a new event value is not detected at 1225, $p_i$, $q_i$, and $b_n$ are used to update the state of the digital mock-up or hardware simulator at time t, in order to create a real-time experience for the user (1227).

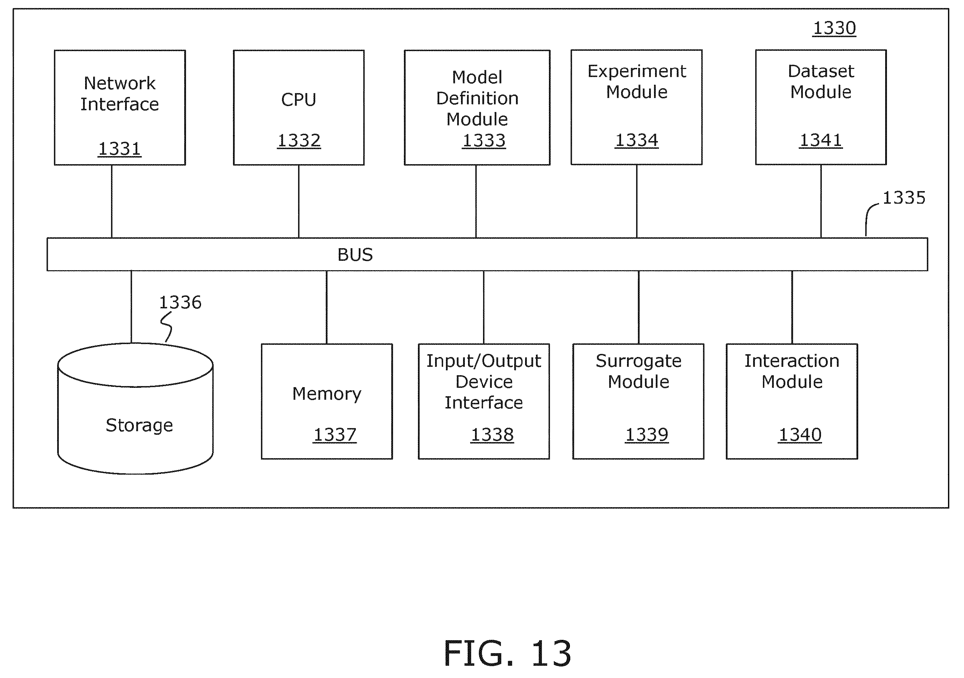

FIG. 13 is a simplified block diagram of a computer-based system 1330 that may be used to generate a surrogate model according to an embodiment of the present invention. The system 1330 comprises a bus 1335. The bus 1335 serves as an interconnect between the various components of the system 1330. Connected to the bus 1335 is an input/output device interface 1338 for connecting various input and output devices such as a keyboard, mouse, display, speakers, etc. to the system 1330. A central processing unit (CPU) 1332 is connected to the bus 1335 and provides for the execution of computer instructions. Memory 1337 provides volatile storage for data used for carrying out computer instructions. Storage 1336 provides non-volatile storage for software instructions, such as an operating system (not shown). The system 1330 also comprises a network interface 1331 for connecting to any variety of networks known in the art, including wide area networks (WANs) and local area networks (LANs).

A model definition module 1333 module is further connected to the bus 1335. The model definition module 1333 is configured to define a model representing a real-world system, the model that is defined includes a parametric state vector representing a behavior and a design variable vector.

An experiment module 1334 is operatively coupled via the bus 1335 to the model definition module 1333 and is configured to perform a first experiment to determine a response over time of the parametric state vector and a second experiment for the design variable vector. In such an embodiment of the system 1330, the first and second experiments produce a data set of the parametric state vector and the design variable vector as a function of time. The system 1330 further includes a data set module 1341 that is configured to receive the data set from the experiment module 1334 and to modify the data sent with one or more derivatives of the parametric state vector. Connected to the bus 1335 is a surrogate module 1339 which is configured to construct a set of surrogate differential equations which approximate a higher derivative of the parametric state vector relative to that in the data set that was determined by the data set module 1341. This constructing by the surrogate module 1339 includes operatively storing, in the memory 1337 or the storage device 1336, the set of surrogate differential equations as a surrogate model. Operatively coupled to the system 1330 is an interaction module 1340 which is configured to responsively provide the surrogate model from memory 1337 or storage 1336 in a manner accelerating simulated behavior in response to user interaction with the model. This providing the surrogate model solves the surrogate differential equations for a given value of the design variable vector including using a time series that solves the state vector of the surrogate model as a function of time.

In embodiments, the accelerated simulated behavior may be considered accelerated in comparison to normal simulation techniques. Moreover, the accelerated simulated behavior may be accelerated or decelerated in comparison to real world events, e.g., the simulation may show the effect of wing flutter at a rate faster than such flutter would occur in the real world.

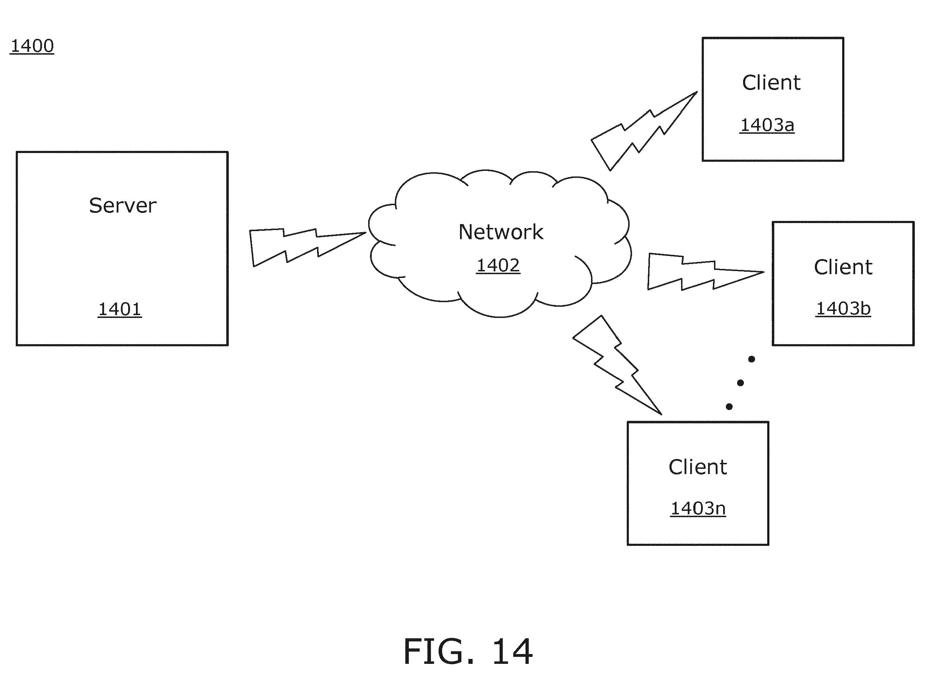

It should be understood that the example embodiments described herein may be implemented in many different ways. In some instances, the various methods and machines described herein may each be implemented by a physical, virtual, or hybrid general purpose computer, such as the computer system 1330, or a computer network environment such as the computer environment 1400, described herein below in relation to FIG. 14. The computer system 1330 may be transformed into the machines that execute the methods described herein, for example, by loading software instructions into either memory 1337 or non-volatile storage 1336 for execution by the CPU 1332. Further, while the model definition module 1333, experiment module 1334, dataset module 1341, surrogate module 1339, and interaction module 1340 are shown as separate modules, in an example embodiment, these modules may be implemented using a variety of configurations. One of ordinary skill should further understand that the system 1330 and its various components may be configured to carry out any embodiments of the present invention described herein.

FIG. 14 illustrates a computer network environment 1400 in which an embodiment of the present invention may be implemented. In the computer network environment 1400, the server 1401 is linked through the communications network 1402 to the clients 1403a-n. The environment 1400 may be used to allow the clients 1403a-n, alone or in combination with the server 1401, to execute any of the methods described hereinabove.

Embodiments or aspects thereof may be implemented in the form of hardware, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and thus, the data processors described herein are intended for purposes of illustration only and not as a limitation of the embodiments.

While this invention has been particularly shown and described with references to example embodiments thereof, it will be understood by those skilled in the art that various changes in form and details may be made therein without departing from the scope of the invention encompassed by the appended claims.

## Claims

1. A computer implemented method for generating a surrogate model for use in an interactive experience, the method comprising:

    defining a model representing a real world system, the model including: a parametric state vector representing a behavior, and a design variable vector;
    performing a first experiment to determine a response over time of the parametric state vector and performing a second experiment for the design variable vector, said performing first and second experiments producing a dataset of the parametric state vector and the design variable vector as a function of time;
    modifying the dataset with one or more derivatives of the parametric state vector;
    constructing a set of surrogate differential equations approximating a higher derivative of the parametric state vector relative to that in the dataset, said constructing including operatively storing in memory the set of surrogate differential equations as a surrogate model; and

responsively providing the surrogate model from memory in a manner accelerating simulated behavior in response to user-interaction with the model, said providing the surrogate model solving the surrogate differential equations for a given value of the design variable vector including using a time-series that solves a state vector of the surrogate model as a function of time.

2. The method of Claim 1 wherein constructing the set of surrogate differential equations comprises:

iteratively constructing one or more candidate sets of surrogate differential equations, the set of surrogate differential equations selected from the one or more candidate sets as the set with a lowest cross validation error to at least a subset of the dataset.

3. The method of Claim 1 or 2 wherein modifying the dataset with the one or more derivatives of the parametric state vector includes removing time from the dataset.

4. The method of any of Claims 1-3 wherein the first and second experiments are at least one of:

a physical experiment; and
a numerical high-fidelity experiment.

5. The method of any of Claims 1-4 wherein the defined model includes at least one of:

discrete events; and
boundary conditions.

6. The method of any of Claims 1-5 wherein the defined model is a high-fidelity, high-dimensional numerical model and the method further comprises:

reducing the dimensionality of the defined model.

7. The method of Claim 6 wherein reducing the dimensionality of the defined model employs at least one of:

principal component analysis;
k-nearest neighbors; and
subspace learning.

8. The method of any of Claims 1-7 further comprising:

exporting the surrogate model to a functional mock-up interface (FMI).

9. The method of any of Claims 1-8 further comprising:

employing the surrogate model in a hardware system, the hardware system including: a flight simulator or automotive electronic control unit (ECU).

10. The method of any of Claims 1-9 wherein the higher derivative of the parametric state vector is approximated using at least one of:

radial basis functions;
neural nets;
chebychev polynomials;
response surface methods;
polynomial response surface methods;
arbitrary term regression;
support vector machines; and
space-mapping.

11. The method of any of Claims 1-10 wherein constructing the surrogate model further includes:

optimizing the surrogate model to reduce variance and bias error.

12. A system for generating a surrogate model for use in an interactive experience, the system comprising modules configured to perform the method of any of claims 1-11.

13. A computer program comprising instructions for performing the method of any of claims 1-11.

14. A computer program product comprising a computer readable medium, the computer readable medium having recorded thereon the computer program of claim 13.

15. The computer program product of claim 14, configured to be executed by a server in communication across a network with one or more clients.

100

FIG. 1

| Define a model representing a real world system, the model including: a parametric state vector representing a behavior, and a design variable vector | 101 |

| Perform a first experiment to determine a response over time of the parametric state vector and performing a second experiment for the design variable vector, said performing first and second experiments producing a dataset of the parametric state vector and the design variable vector as a function of time | 102 |

| Modify the dataset with one or more derivatives of the parametric state vector | 103 |

| Construct a set of surrogate differential equations approximating a higher derivative of the parametric state vector relative to that in the dataset, said constructing including operatively storing in memory the set of surrogate differential equations as a surrogate model | 104 |

| Responsively provide the surrogate model from memory in a manner accelerating simulated behavior in response to user-interaction with the model, said providing the surrogate model solving the surrogate differential equations for a given value of the design variable vector including using a time-series that solves a state vector of the surrogate model as a function of time | 105 |

FIG. 2

EP 3 035 219 A1

FIG. 3

FIG. 4

540

Full cosim data 541    1st order 542    4th order 543

time (s)

alpha (rad)

FIG. 5

FIG. 6

FIG. 7

FIG. 8

EP 3 035 219 A1

FIG. 9

FIG. 10

**1100a**

**1101** Start Authoring

**1102** Define system design variables $v_i$ , system internal states $p_i$ , system states of interest $q_i$ and system boundary conditions $b_i$ at, 3D system sensor locations in a memory area

**1103** Conduct time series experiment recording state $p_i$ , $q_i$ behavior for variables $v_i$ over a range min $< v_i <$ max and initial state conditions $q_{t=0}$ $p_{t=0}$ from time t=0 to t=t

**1104** Concatenate data rows for design variables and time t versus state
$$row_i = v_i \ , t \ , p_i \ , q_i \ , b_i$$

**1105** Use time stamp t to compute all relevant state $p_i$ and boundary condition $b_i$ time derivatives and eliminate time as a parameter in dataset :
$$row_i = v_i \ , p_i \ , p'_i \ , p''_i \ .. \ , q_i \ , q'_i \ , q''_i \ .. \ b_i \ , b'_i \ , b''_i \ .. \quad \text{Where} \ x' = dx/dt, \ x'' = d^2x/dt^2$$

authoring

# FIG. 11a

1100b

1105

**1106** Assign data row$_i$ randomly into a training and (smaller) validation data set

**1107** For time derivatives of states of interest q$_i$, q$'_i$, q$''_i$ ..    From i=0 to 3 step 1

authoring

**1108** Create Function F using surrogate* technology
If i=0 → q$_i$ = F (v$_i$ , p$_i$ , p$'_i$ , p$''_i$ .. b$_i$ , b$'_i$ , b$''_i$ ..)
If i=1 → q$'_i$ = F (v$_i$ , p$_i$ , p$'_i$ , p$''_i$ .. b$_i$ , b$'_i$ , b$''_i$ ..)
If i=2 → q$''_i$ = F (v$_i$ , p$_i$ , p$'_i$ , p$''_i$ .. b$_i$ , b$'_i$ , b$''_i$ ..) ..

* e.g. polynominal and other regression techniques .

**1109** q$_i$ , q$'_i$ , q$''_i$ (Predicted -.. Validation set) > ε     NO → **1110** i=i+1

YES

**1111** Authoring complete

# FIG. 11b

EP 3 035 219 A1

```
                                                                    1220
┌─────────────────────────────────────────────────────┐  1221
│         Runtime Experience (Offline or Real-time)     │
└─────────────────────────────────────────────────────┘
```

Solve equations <u>Offline</u> for states $p_i$, $q_i$ with new initial conditions m at time=0, and with new variables values k, and new time dependent boundary conditions or events $b_n$ (time) stored in memory area, next, store the solution time series in memory area (time, $v_k$, t, $p_i$, $q_i$, $b_n$) for postprocessing    1222

Start <u>Real-time</u> use to drive states $p_i$, $q_i$ of digital mockup or hardware simulator with new initial conditions m at time=0 and with variable values k, and boundary conditions or event values $b_n$    1223

user
controller → $b_n$    1224    1225
context
Sample time=t

new $b_n$ detected?    YES → Real time: Solve equations and advance time time=time+dt synchronous with clock    1226

NO

Use $p_i$, $q_i$, $b_n$ to update state of digital mockup or hardware simulator at time t in order to create a real-time experience for the user    1227

# FIG. 12

EP 3 035 219 A1

1330

| Network Interface 1331 | CPU 1332 | Model Definition Module 1333 | Experiment Module 1334 | Dataset Module 1341 |

1335

**BUS**

1336

| Storage | Memory 1337 | Input/Output Device Interface 1338 | Surrogate Module 1339 | Interaction Module 1340 |

# FIG. 13

1400

Server

1401

Network

1402

Client

1403a

Client

1403b

Client

1403n

EP 3 035 219 A1

FIG. 14

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Andrew R Crowell ET AL: "Surrogate Based Reduced-Order Aerothermodynamic Modeling for Structural Response Prediction at High Mach Numbers 52nd AIAA/ASME/ASCE/AHS/ASC Structures, Structural Dynamics and Materials Conference<BR> 19th 4 -7 April 2011",<br><br>, 7 April 2011 (2011-04-07), pages 1-26, XP055253144, Retrieved from the Internet: URL:http://enu.kz/repository/2011/AIAA-2011-2014.pdf [retrieved on 2016-02-25] * The whole document, note in particular titles "II. Surrogate Model" *<br>----- | 1-15 | INV. G06F17/50 |
| A | ZHIGUAN QIAN AND CAROLYN CONNER SEEPERSAD AND V ROSHAN JOSEPH AND JANET K ALLEN AND C F JEFF WU: "Building Surrogate Models Based on Detailed and Approximate Simulations", JOURNAL OF MECHANICAL DESIGN, A S M E INTERNATIONAL, US, vol. 128, 1 July 2006 (2006-07-01), pages 668-675, XP008139428, ISSN: 1050-0472 * The whole document, note in particular the section titled "2 Building a Surrogate Model Based on Detailed Approximate Simulations" *<br>----- | 1-15 | |
| A | US 7 991 593 B2 (OLSEN TOR-MORTEN [SE] ET AL) 2 August 2011 (2011-08-02) * The whole document, note in particular the passage from column 12, line 50, to column 15, line 56, with reference to figure 1 *<br>----- | 1-15 | TECHNICAL FIELDS SEARCHED (IPC)<br><br>G06F |

The present search report has been drawn up for all claims

| Place of search | Date of completion of the search | Examiner |
|---|---|---|
| Munich | 25 February 2016 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 20 1084

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2016

| Patent document cited in search report | | Publication date | Patent family member(s) | | Publication date |
|---|---|---|---|---|---|
| US 7991593 | B2 | 02-08-2011 | AT | 417696 T | 15-01-2009 |
| | | | CA | 2534986 A1 | 24-03-2005 |
| | | | EP | 1665146 A1 | 07-06-2006 |
| | | | ES | 2321196 T3 | 03-06-2009 |
| | | | JP | 5248773 B2 | 31-07-2013 |
| | | | JP | 2007534038 A | 22-11-2007 |
| | | | US | 2007043622 A1 | 22-02-2007 |
| | | | WO | 2005027002 A1 | 24-03-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multiquadratic equations of topography and other irregular surfaces. *J. Geophysics Res.,* 1971, vol. 76, 1905-15